# EUROPEAN PATENT SPECIFICATION

(11) **EP 0 837 435 B1**
(45) Date of publication and mention of the grant of the patent: **27.03.2002**
(21) Application number: 96938217.5
(22) Date of filing: 08.11.1996
(51) Int. Cl.: G09B 1/36, G09B 19/02, A63F 9/12, A63H 33/10

(54) **SET OF CONSTRUCTION PIECES FOR DIDACTIC-EDUCATIVE GAMES**
BAUTEILSATZ FÜR DIDAKTISCH-ERZIEHERISCHE SPIELE
ENSEMBLE DE PIECES DE CONSTRUCTION POUR JEUX DIDACTIQUES-EDUCATIFS

(30) Priority: 08.11.1995 ES 9502194
(43) Date of publication of application: 22.04.1998
(73) Proprietor: LEMOS MELENDEZ, Manuel, E-11405 Jerez de la Frontera (ES)
(72) Inventor: LEMOS MELENDEZ, Manuel, E-11405 Jerez de la Frontera (ES)
(74) Representative: Del Campo Castel, Domingo
(86) International application number: ES9600209
(87) International publication number: WO9717687

## Description

### OBJECT OF THE INVENTION

As expressed in the title of this specification, the present invention refers to a set of building parts for didactic-educational toys, whereby relevant and advantageous features are provided in the development of this type of toys, mainly increasing the versatility for the development of three-dimensional geometric shapes.

### BACKGROUND OF THE INVENTION

Patent of Invention n° ES 2071561 whose applicant is the same one as for the present invention, revealed a didactic-educational toy for elementary arithmetic operations that was comprised of a series of parts or elements that could be combined together, combining in a coplanar manner with the help of some boards corresponding to the sides, fitting in a perimetric furrow or groove existing in the parts materialized by generally rectangular shaped plates.

There are plates representative of digits, from "one" that is materialized by a small quadrangular surface plate equivalent to one-tenth of the surface representative of the number "ten", all of them having some stepped cylindrical protuberances, there being as many as the number that they represent. These plates have bottom recesses to allow stacking upon fitting in adequately.

There is also a series of figurative parts that can be assembled in the perimetric groove of the plates in order to permit the studying of the spatial concepts of left, right, up, etc.

In a Certificate of Addition to this cited Patent and whose application number is ES 2110869 some improvements were introduced in Patent of Invention no. ES 2071561 mainly based on the following:

Some mounting parts of the different "X"-shaped or double "X"-shaped numeric plates fitting in the stepped cylindrical protuberances, are included.

The plates with ciphers adopt in this case a rectangular mold structure where the suitable numeric plates fit in to identify the number with the shape thereof.

Besides, there are also rigid angular or jointed parts in order to be able to change the plane and to take on different angular positions.

The stepped cylindrical protuberances have different diametric cuts in order to be able to place other parts or pieces of cardboard vertically and in different directions, these plates having the perimetric furrow corresponding to their edges.

### DESCRIPTION OF THE INVENTION

In broad outline, the set of building parts for didactic-educational toys, that comprises the object of the present invention, allows by itself the development of a didactic-educational toy, as well as the creation of constructions with their different parts, which in turn can be combined or form part of other elements previously developed by the same applicant and commented on in the "background of the invention" section.

As the basic main part we can cite that which is called the parallelepiped base part that has grooved and tongued interconnecting means for coplanar coupling with other similar base parts. These base parts are flat and have a thickness that suitably allows placement of the perimetric coplanar coupling groove by means of some flat extensions or tongue pieces. These tongue pieces may be independent or may be extensions of the parts themselves in some of their edges. The base parts are provided at least with a through recess on the larger surfaces thereof, wherein the respective stepped cylindrical button that defines another of the main types of parts of this set can connect. The cylindrical button is stepped and can rotate in its housing upon being provided with some peripheral axial pins that move in a ring-shaped recess of the base part, that occupies a position concentric to the respective recess of the same.

The ring-shaped recesses of the base parts are placed on both surfaces of the same, just like the anchoring pins of the stepped cylindrical pin are. This permits insertion of the cylindrical button by the top part or by the bottom part of the base part.

Likewise, these buttons are stackable upon having a cylindrical inside recess in whose wall the end step of another stepped cylindrical button that has been introduced underneath penetrates. The buttons also include a diametric cut for insertion of the tongue pieces of the plates that materialize the base parts, or any other type of plate, and even pieces of cardboard in constructional plastic activities.

As the button rotates on the ring-shaped housing of the base plates, an exact rotation adjustment of the diametric cut is obtained. These stable positions are obtained upon providing for some small teeth that move with the axial pins of the button.

With regard to these axial pins of the cylindrical buttons, we can say that they are advantageously four and each two consecutive ones are located at a distance corresponding to the thickness of the base parts themselves, which makes it possible to place them vertically and in two positions rotated 90°. In order to achieve a greater fastening it has been provided for that the axial pins, at least the bottom ones, have in their sides small bulges that fit in the furrows existing in the larger surfaces of the base parts, close to the edges that mark the contour of said base parts.

These parts can therefore have a square shape with an axial recess in the center and a concentric ring-shaped recess on each surface. Likewise, it has a perimetric groove and two flat extensions or tongue pieces located in two consecutive edges. To increase the fastening in the coplanar coupling, these tongue pieces can include some small bulges that insert by pressure.

The surface of the different parallelepiped base parts correspond to a multiple of this elementary surface of the square base part.

Irrespective of the fact that the cylindrical button is or is not assembled in these base parts, they represent digits, up to a maximum of ten, defined by the corresponding number of axial recesses included. In addition operations with different base parts, until a group of ten is formed, some sliders with a longitudinal hollow in one of the surfaces thereof, or in both, wherein the group of ten will be formed, are used. These sliders also advantageously have a perimetric groove and tongue pieces in their contour to thus allow use in constructions just like the base parts themselves.

In order to be able to identify the length of the base parts with the digit that they represent, each one of the different types can be included in the respective slot provided for in a rectangular plate that will also advantageously have the perimetric groove for insertion of pieces of cardboard or the tongue pieces of other integral ports of the toy. Inside each one of these slots (from one to ten) the number with its shape and the outline thereof are marked, encouraging the student with the mnemonic drawings that would optionally be placed around the hollows of the shape.

Another building part is defined by the "half" elements of the square base part, upon being divided into two complementary triangular parts that may or may not include an axial recess, though it does have the ring-shaped recess for insertion of the cylindrical buttons, in one surface or the other. Each one of these triangular portions includes in one of the legs the corresponding coplanar coupling side tongue piece. Grooved and tongued coupling of both triangular halves is made possible, as both of them have complementary projections and recesses, the projections being advantageously located in a same half part and at a distance between each other that corresponds to the diameter of the concentric ring-shaped recess of the base part, in order to allow coupling in a perpendicular position.

In order to achieve the change of planes and hinged angular rotation and with different stable positions that cover 180° by rotation of 90° in one direction and the other, there are square base parts similar to the previous ones, but that have in one of their free edges of tongue pieces a pair of pins parallel to each other and perpendicular to the plane thereof, between which a complementary projection provided on the other similar base part is coupled, these parts thus acting as limbs of a hinge.

The edges of these limbs that end up close to each other, are advantageously beveled at 45°.

Another type of part that takes part in the building set in question, consists of some square covers, provided on the bottom with a (continuos or discontinuous) ring-shaped projection that can insert in the coaxial ring-shaped recess of the base parts. These covers have on the top surface and corresponding to the ring-shaped projection of the bottom surface, a ring-shaped channel that can allow stacking of the covers. These covers can also be provided with a hollow coaxial cylindrical stub with a diameter corresponding to the axial recess of the base parts, for insertion thereof in a reverse position and to allow for more possibilities of assembly of parts in the construction.

Another type of part, functionally similar to the covers, is defined by triangular parts obtained by a diagonal cut of the square covers. These covers totally occupy the surface of a square base part.

With the square as well as elongated base parts, as well as with the triangular base parts, one can form a rectangular panel as a playing board, or else one that follows the contour of a desired drawing. One can obtain a mosaic motif by using the precise square or triangular covers, it not being necessary to use the cylindrical buttons.

If one wishes to change the plane or the formation of three-dimensional structures, mosaic drawings can be made by also using the parts described finally, the hinge parts. Thus the structures that arise from them can be collapsible.

It has also been provided for that another one of the parts of this building set, is defined by some separators that allow coplanar coupling, though distant, of the base parts, without these base parts having to remain grooved and tongued interconnected upon the extensions of one of them being housed in the perimetric groove of the other one. The cross section of these separating parts is "h-shaped" and the horizontal walls have their free edge curvi-concave in order to adapt to the contour of the stepped cylindrical buttons. This makes it possible to do without the linear sliders for the formation of groups of tens that thus remain slightly separated by means of these separating parts.

As we have indicated above, thanks to the rotating arrangement that the cylindrical button adopts in the axial housing of the different base parts, the diametric groove of its top end is positioned in the desired angular position. The same thing could also be obtained, though not so freely, if the base parts included an axial recess star-shaped in one of its surfaces and the other one having an extension or orthogonal fin in diametric position. In stacked coupling, the tongue piece could be inserted in the selected star-shaped or radiating groove.

To provide a better understanding of the features of the invention and forming an integral part of this specification, some sheets of drawings in whose figures, in an illustrative and non-restrictive manner, the following has been represented, are attached hereto:

### BRIEF DESCRIPTION OF THE DRAWINGS

Figure 1 is a perspective view of a square base part including a cylindrical button with its bottom surface inserted, also showing in an exploded manner a second cylindrical button placed on top.

Figure 2 is a cross section of a square base part with a cylindrical button with its bottom surface inserted.

Figure 3 is a plan view of a square base part that has three cylindrical buttons assembled in different positions, one of these cylindrical buttons having connected perpendicularly another square base part.

Figure 4 is a perspective view of a pair of parts of the building set, generally triangular, and that complement a square base part, both having interconnecting means to achieve grooved and tongued coupling thereof.

Figure 5 is a perspective view of another part comprising the building set, defined as a hinge element, the latter being formed by the articulation of two limbs similar to respective square base parts.

Figure 6 is a perspective view of a rectangular playing board that has a mosaic motif, achieved by using some covers insertable in the axial recess or ring-shaped recess of the base parts, these covers being of two types: square and triangular.

Figure 7 is a perspective view of one of the square insertion covers for the formation of a mosaic drawing, one being able to see from the top the obverse side of the part, and from the bottom its reverse side.

Figure 8 is a perspective view of the triangular covers, obtained by the diagonal cut of the square covers of figure 7.

Figure 9 is a perspective view of a part similar to the square cover, with a coaxial cylindrical extension longer than the covers and a smaller contour surface, usable as an element to remove the covers themselves, at the top part of the playing board.

Figure 10 is a perspective view of a didactic-educational toy that includes a set of building parts, forming a doll.

Figure 11 is a perspective schematic perspective view of a part of the building set, that defines a template with ciphers to house in their respective hollows, different base parts depending on the number of insertion holes of the cylindrical buttons whose number the corresponding cipher determines.

Figure 12 is a perspective view of another one of the parts included in the building set, defined by a slider with a base part location recess to sum up the formation of a group of ten, in didactic-education operations, likewise being usable for building, upon being provided with grooved and tongued coupling means.

Figure 13 is a perspective view of a playing board with base parts grouped together in groups of ten, each one of them separated parallel to the contiguous ones by means of separating parts included in the proposed building set, thus being used for the formation of numbers and operations carried out with them.

Figure 14 is a plan view to observe the connection of two base parts, by means of a separating part included in the building set, corresponding with the perspective detailed view of this same figure.

### DESCRIPTION OF THE PREFERRED EMBODIMENT

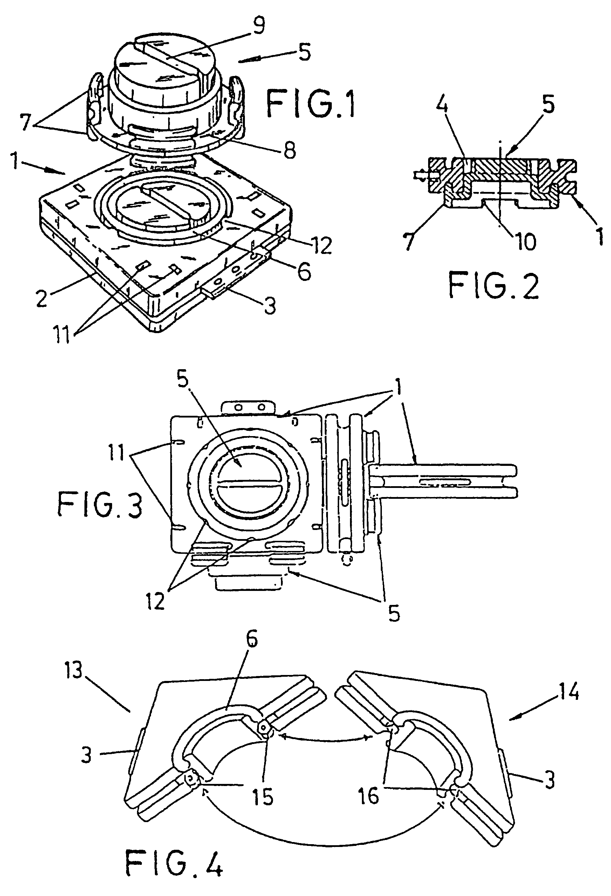

Making reference to the numbering used in the figures, we can see how the set of building parts for didactic-education toys, that the invention proposes, includes a type of part defined by the parallelepiped square base parts (1) and in the case of figure 1 with a quadrangular contour, this being the basic surface of the base parts (1). The rest of the parts have a multiple surface of t:he previous one, up to the longest length that includes ten basic units.

The base parts include a perimetric groove (2) for grooved and tongued coupling into one another, as there are tongue pieces (3) on two contiguous edges.

The quadrangular base part (1) includes an axial recess (4) for insertion of the cylindrical button (5). As we have indicated above, on both surfaces there are respective ring-shaped recesses (6) in which the peripheral axial pins (7) of the cylindrical button (5), emerging from the circular crown (8), through both surfaces of the same to allow for insertion of the cylindrical button in the top part or in the bottom part of the base plate (1), move.

Reference (9) designates the diametric groove of the top part of the cylindrical button (5), that opens up on the sides, having therein a smaller width, as one can clearly see in figure 1.

In figure 2 we can see the coupling of the cylindrical button (5) at the bottom part of the base part (1), housing the four top pins (7) of the former, in the ring-shaped recess (6) of the bottom surface of the base part (1). If the insertion had been done at the top part, it would be the bottom pins (7) of the cylindrical button (5) that would be inserted in the ring-shaped recess (6) of the top surface of the base part (1). In this way the stacking of different base parts (1) is achieved.

Now making special reference to figure 3, we can see how due to the fact that the thickness of the base parts (1) corresponds to the distance between the axial pins (7) of the bottom surface of the cylindrical buttons (5), the base part (1) can be placed perpendicular to the cylindrical button, remaining retained between said axial pins (7), stabilizing the centered coupling position, upon providing for some small bulges (10) on the contact surface of the pins (7), insertable in the respective furrows (119 of the larger surfaces of the base parts (1), placed close to the edges of the perimeter thereof.

In order to stabilize the relative position of rotation between the cylindrical button (5) and the base part (1), the walls of the ring-shaped recess (6) of the latter include some small teeth (12) that collaborate with the axial pins (7) of the cylindrical button (5).

In figure 4 the triangular parts called "half" elements of the square base parts are referred to as numbers (13) and (14). Their contour is that of a right-angled triangle in one of whose legs there is the corresponding tongue piece (3) of coplanar coupling between different base parts. The edge corresponding to the hypotenuse has the axial half recess (4) of the base part (1) made therein. Therefore, these triangular parts (13) and (14) include the perimetric groove (2) and the corresponding part of the ring-shaped recess (6). Both parts can be interconnected in a grooved and tongued manner since part (13) includes the pair of projections (15) and since the second one is provided with recesses (16). The separation of the projections (15) corresponds with the diameter of the ring-shaped recess (6) in order to allow coupling of this half part with a base part placed orthogonally.

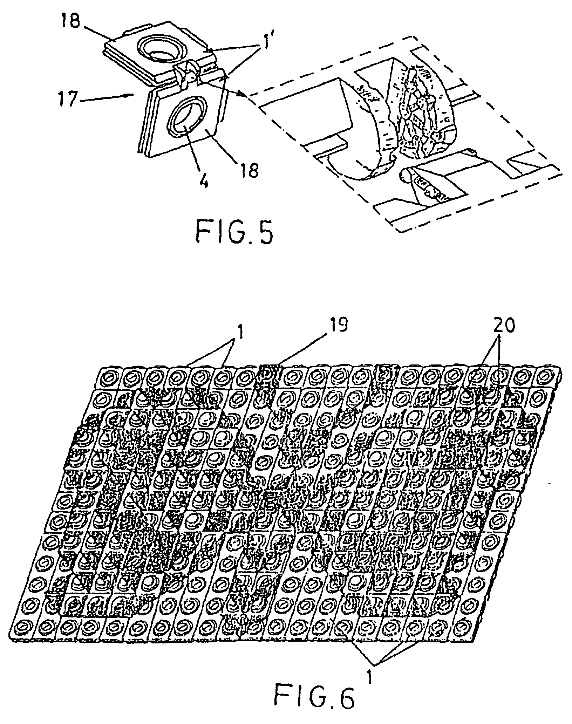

In figure 5 another one of the parts comprising the building set is referred to as number (17). It materializes a hinged body since it has its limbs or half parts of the hinge articulated. Each one of them is defined by respective parts similar to the base parts (1) since they have the perimetric groove, tongue pieces, axial recess and ring-shaped recess to allow the different couplings of different parts.

In the enlarged detailed view of this figure 5 we can see how the different angular positions of the hinge corresponding to the coplanar position of the limbs at 45° and at 90°, in one direction and the other, are kept stable. We can see that the edges of the limbs are beveled at 45° to facilitate the angular position of 90°.

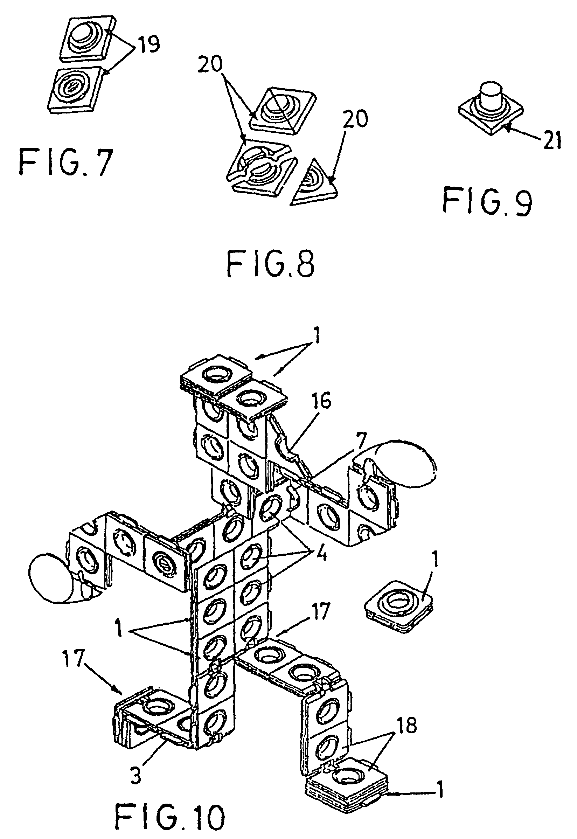

Now making special reference to figures 6 to 9, we can see how mosaic drawings are obtained by using specific parts of the building set, materialized by the base parts (1) to form the rectangular playing board in this case, and by the insertable covers (19) and other similar triangular ones obtained by the diagonal cut of the base parts. These triangular covers are referred to as number (20). The covers (19) are stackable upon having a ring-shaped projection on the bottom surface and a ring-shaped channel on the top surface, in opposite positions. These covers (19) are advantageously provided with a hollow coaxial cylindrical stub for insertion thereof in the reverse position in the axial recess of the base parts (1), whose height may be the most convenient one. In figure 9, a tool for removing covers (19) and (20) is referred to as number (21). The coaxial cylindrical stub thereof is notably longer to allow gripping. The quadrangular contour of this removing tool (21) is of a smaller dimension than the one corresponding to the covers (19) so as to not interfere with the contiguous ones when a mosaic decorated motif is being formed, such as the butterfly that is shown in figure 6.

In figure 10, we can see different base parts (1) (with a square contour in this embodiment), used together with the hinged parts (17) and the triangular parts (13) and (14) for the formation of a doll.

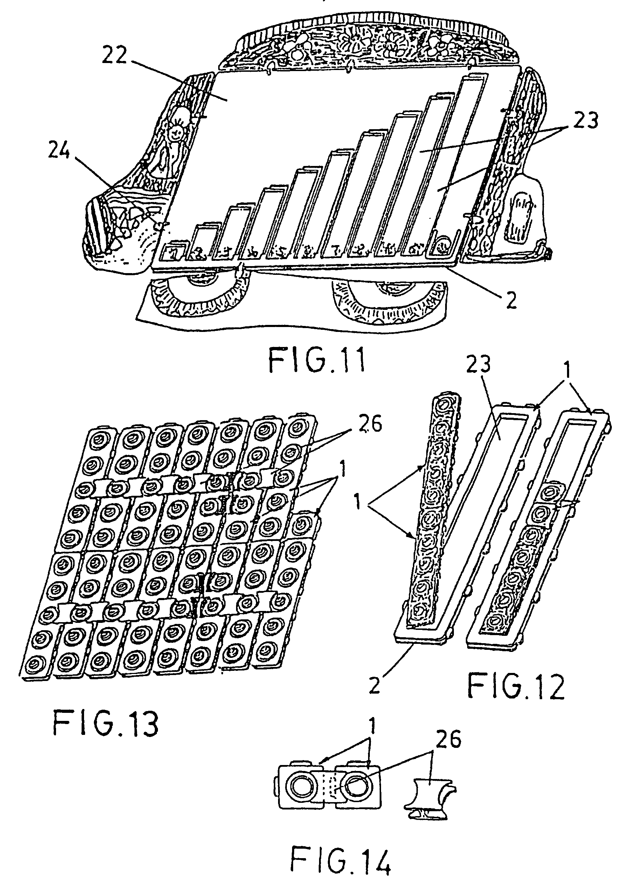

In figure 11 as reference number (22) we see a rectangular template that includes parallel slots or recesses (23) adapted to the dimensions of the base parts (1), having a different length to correspond with the correlative numbering that marks the cipher located in this embodiment, on the bottom part of the recesses or slots themselves. These templates (22) have a perimetric groove (2) to allow their coplanar coupling with other integral parts of the construction. By means of this perimetric groove, or else by means of fastening pincers (24), pieces of cardboard may be put in place in order to form an object, doll, animal, or place, thus obtaining a producer of situations to stimulate the student to operate mathematically.

Another one of the integral parts of the building set is generally referred to as number (25) in figure 12 and it represents a slider with a rectangular slot or recess (23) in which base parts (1) can be located in order to complete the "group of ten" formed in this case by two base parts each one with five axial recesses, representative of the number five and that may or may not include the cylindrical buttons (5). This slider (25) includes the perimetric groove and the side tongue pieces for coplanar coupling between different sliders and/or templates (22), as well as to also allow connection in a coplanar manner to the base parts themselves (1). The width of the slider (25) corresponds with the double of the dimension corresponding to the side of the base parts (1) and the length corresponds to thirteen times the length of the side of said square base part.

In figures 13 and 14 we can see as reference number (26) the separating parts with an "H"-cross section and distinguish by groups of ten the base parts (1) that are being formed upon operating in the formation of groups of one hundred. Thus, in the example of figure 13 the number 76, that can constitute an addend of another number formed until summing up the group of one hundred materialized by ten parallel alignments separated by the separating parts (26), has already been formed.

## Claims

1. Set of building parts for didactic-educational toys, including a parallelepiped base part (1) with grooved and tongued interconnecting means for coplanar coupling to other base parts, upon having a perimetric groove (2) in the edges thereof for insertion of flat parts or tongue pieces (3), independent or fixed as extensions in some of the edges, **characterized in that** the set of building parts further includes a cylindrical part that is formed as a stepped cylindrical button (5), connectable to the parallelepiped base part (1), said parallelepiped base part being provided with at least one axial receiving recess (4), for insertion of the cylindrical button the button being able to rotate in its housing due to the provision on the button of peripheral axial pins (7) that are housed in a ring-shaped recess (6) of the base part (1), concentric to the respective axial receiving recess (4) of the same; the end of said pins bulging and the ring-shaped recess (6) receiving the base part (1) having a "C"-shaped section for insertion.

2. Set of building parts for didactic-educational toys, according to claim 1, wherein the ring-shaped recesses (6) of the base part (1), as well as the axial pins (7) of the cylindrical button (5), exist on both surfaces to allow insertion of the cylindrical button (5) in the top surface or the bottom surface of the base part.

3. Set of building parts for didactic-educational toys, according to claims 1 or 2, wherein the top part of the cylindrical button (5) is provided with a diametric groove (9) that opens up to the periphery.

4. Set of building parts for didactic-educational toys, according to claims 2 or 3, wherein at least the axial pins (7) on the bottom surface of the cylindrical button (5), have in their sides some small bulges for insertion in respective furrows existing in the larger surfaces of the base parts, upon placing the latter on edge and in a diametric position with regard to the cylindrical button (5), upon remaining fixed between the pins and in two vertical positions rotated 90°, as the distance between the pins (7) corresponds to the thickness of the base part.

5. Set of building parts for didactic-educational toys, according to claims 3 or 4, wherein the ring-shaped recesses (6) of the base parts (1) for insertion of the pins (7) of the cylindrical button (5) are provided with some small teeth (10) that move with the pins (7) of the button (5) to mark different stable positions for the diametric groove (9) of the cylindrical button.

6. Set of building parts for didactic-educational toys, according to claims 2 to 5, wherein the top and bottom pins (7) of the buttons (5) permit stacking of the base parts (1), also achieving this stacking of base parts by bushings insertable through their ends in the respective ring-shaped recesses (6) of said base parts.

7. Set of building parts for didactic-educational toys, according to claim 6, wherein the bushings have their edges castellated forming legs similar to those of the cylindrical buttons (5) in an equal number and shape.

8. Set of building parts for didactic-educational toys, according to any of the above claims, wherein the base parts (1) have a square contour and have a single axial recess (4), having two side, fixed or independent, tongue pieces, in two consecutive edges.

9. Set of building parts for didactic-educational toys, according to claim 8, **characterized in that** the square base part (1) is divided into two complementary triangular parts (13,14), which include an axial recess (4), having both coplanar coupling side tongue pieces (3), each one of them having in their edges corresponding to the hypotenuses, on each side of the axial recess (4), some complementary projections (15) and recesses (16) to allow grooved and tongued coupling thereof.

10. Set of building parts for didactic-educational toys, according to claim 9, wherein the projections (15) are in a same half part (13) and at a mutual distance that corresponds with the diameter of the concentric ring-shaped recess (6) of the base part (1), to allow coupling of this half part (13) with a base part (1) placed orthogonally.

11. Set of building parts for didactic-educational toys, according to claim 8, **characterized in that** it includes an articulated part (17) defined by two square base parts, one of which has in one of its edges free of tongue pieces, both pins parallel to each other and perpendicular to the plane thereof for coupling with a complementary projection provided for in the other similar square base part, making it possible to form together a hinged body (17) with different stable angular positions and covering 180°; the longitudinal edges close to both limbs of the hinge being beveled in order to allow rotation of 90° in one direction or the other.

12. Set of building parts for didactic-educational toys, according to any of the above claims, **characterized in that** it includes some covers (19) provided on the bottom with a projection insertable in the axial recess (4) or coaxial ring-shaped recess (6) of the square, elongated rectangular base parts (1), of the complementary triangular parts (13,14) or of the limbs of the hinged bodies (17).

13. Set of building parts for didactic-educational toys, according to claim 12, wherein the covers (19) have in the bottom a ring-shaped projection and they have a ring-shaped channel on the top surface, in correspondence with the ring-shaped projection of the bottom surface, thus being stackable and being able to be provided with a hollow coaxial cylindrical stub for insertion thereof in a reverse position in the axial recess (4) of the base parts.

14. Set of building parts for didactic-educational toys, according to claim 13, wherein the bottom ring-shaped projection of the cover (19) is discontinuous and has four sections whose separation allows orthogonal arrangement in two positions, of another cover (19) or folded piece of cardboard or the like.

15. Set of building parts for didactic-educational toys, according to any of the claims 12 to 14, wherein the covers (19) are divided into two parts (20) as they are cut by a diagonal plane.

16. Set of building parts for didactic-educational toys, according to claim 1, **characterized in that** it includes some rectangular templates (22), provided with a perimetric groove (2) and on whose surface there are parallel recesses (23) for insertion of square base parts (1) and other elongated ones that define the multiples of the basic square surface, up to the one corresponding to the number ten, having the corresponding cipher marked and shaped.

17. Set of building parts for didactic-educational toys, according to claim 1, **characterized in that** it includes some rectangular sliders with a perimetric groove and coplanar coupling tongue pieces, on whose surface there is a longitudinal recess for insertion of a base part having ten axial recesses, or a combination of other smaller base parts.

18. Set of building parts for didactic-educational toys, **characterized in that** it includes :
- square base parts (1) provided with at least one axial recess (4) and concentric ring-shaped recesses (6), with a perimetric groove (2) and coplanar coupling tongue pieces (3),
- triangular base parts (13,14) obtained by cutting of the square base parts (1), according to a diagonal plane and that have grooved and tongued coupling means between them,
- square covers (19) provided with a continuous or discontinuous ring-shaped projection on their bottom surface for insertion in the ring-shaped recess of the base parts (6), also having a ring-shaped channel in the top surface for stacked coupling and a coaxial cylindrical stub for insertion in a reverse position, in the axial recess (4) of the base parts,
- triangular covers (20) obtained upon cutting by a diagonal plane the square covers (19), a rectangular panel as a playing board or to constitute the contour of a mosaic drawing with the help of triangular base parts (13,14); whereby the square (19) or triangular (20) covers needed to form other mosaic drawings are placed on said panel.

19. Set of building parts for didactic-educational toys, according to claim 18, **characterized in that** it also includes hinged-type articulated parts (17) defined by two square base parts, one of which has in one of its edges free of tongue pieces, both pins parallel to each other and perpendicular to the plane thereof for coupling with a complementary projection provided for in the other similar square base part, making it possible to form together a hinged body with different stable angular positions and covering 180° allowing the formation of three-dimensional and collapsible constructions.

## Patentansprüche

1. BAUTEILSATZ FÜR DIDAKTISCH-ERZIEHERISCHE SPIELE, der ein Unterteil in Form eines schiefen Quaders besitzt. In diesem ist eine Vorrichtung angebracht, die aus einer spundförmigen Verbindung besteht, so dass in das Unterteil auf gleicher Ebene weitere Unterteile eingefügt werden können, da an den Kanten auf dem gesamten Umfang eine Kerbe angebracht ist. In diese Fuge können freie oder feste Federn oder schmale Teile im Sinne einer Verlängerung an einigen der Kanten eingeschoben werden. Die Besonderheit besteht in einem zylindrischen Bauteil, wobei es sich genauer ausgedrückt um einen stufenförmigen zylindrischen Knopf (5) handelt, der an das Unterteil (1) in Form eines schiefen Quaders angeschlossen werden kann und der mindestens eine axiale Empfängeraussparung (4) besitzt, wobei der Knopf (5) in seiner Lagerung gedreht werden kann, da er einige periphere axiale Bügel (7) hat, die in einer ringförmigen Abschrägung (6) im Unterteil (1) sitzen und sich hinsichtlich der Aussparung (4) konzentrisch verhalten. Die Bügelenden sind verstärkt und die ringförmige Abschrägung (6) besitzt einen C-förmigen Einschnitt für das Unterteil (1), in den dieses genau hineinpasst.

2. BAUTEILSATZ FÜR DIDAKTISCH-ERZIEHERISCHE SPIELE, laut dem 1. Patentanspruch, in dem sowohl die ringförmigen Abschrägungen (6) des Unterteils (1), sowie die axialen Bügel (7) des zylindrischen Knopfes (5) auf beiden Seiten bestehen, um den zylindrischen Knopf (5) auf der Ober- oder der Unterseite des Unterteils (1) einfügen zu können.

3. BAUTEILSATZ FÜR DIDAKTISCH-ERZIEHERISCHE SPIELE, laut dem 1. oder dem 2. Patentanspruch, in dem die obere Seite des zylindrischen Knopfes (5) eine diametrale Rille enthält, die sich zum Kreisumfang hin öffnet.

4. BAUTEILSATZ FÜR DIDAKTISCH-ERZIEHERISCHE SPIELE, laut dem 1. bis 3. Patentanspruch, in dem die axialen Bügel (7) des zylindrischen Knopfes (5), zumindest die unteren an den Seiten kleine Ausbuchtungen (10) besitzen, die in die entsprechenden Spalten (11) auf den größten Flächen des Unterteils (1) eingelassen werden können, wenn dieses auf die Kanten und diametral zum zylindrischen Knopf (5) gestellt wird, so dass es zwischen den Bügeln (7) hochkant in zwei Stellungen in 90 Grad Winkeln steht, wobei der Abstand zwischen den Bügeln (7) der Dicke des Unterteils (1) entspricht.

5. BAUTEILSATZ FÜR DIDAKTISCH-ERZIEHERISCHE SPIELE, laut jedem der obigen Patentansprüche, in dem die ringförmigen Abschrägungen (6) des Unterteils (1) zum Einschieben der Bügel (7) des zylindrischen Knopfes (5) kleine Vorsprünge (12) aufweisen, die an die Bügel (7) des Knopfes (5) angepasst sind, um verschiedene feste Stellungen der diametralen Kerbe (9) des zylindrischen Knopfes (5) zu markieren.

6. BAUTEILSATZ FÜR DIDAKTISCH-ERZIEHERISCHE SPIELE, laut jedem der obigen Patentansprüche, in dem die Bügel (7), die sich ober- oder unterhalb des Knopfes (5) befinden, ein Stapeln der Unterteile (1) ermöglichen, wobei ebenfalls ein Stapeln von Unterteilen (1) mithilfe von an ihren Enden in die entsprechenden ringförmigen Abschrägungen (6) des Unterteils (1) passenden Hülsen ermöglicht wird.

7. BAUTEILSATZ FÜR DIDAKTISCH-ERZIEHERISCHE SPIELE, laut dem 6. Patentanspruch, in dem die Hülsen an den Rändern gezackt sind und den zylindrischen Knöpfen (5) ähneln und die gleiche Anzahl und Anordnung wie diese aufweisen.

8. BAUTEILSATZ FÜR DIDAKTISCH-ERZIEHERISCHE SPIELE, laut jedem der obigen Patentansprüche, in dem die Unterteile (1) viereckig sind und nur eine axiale Aussparung (4) besitzen und zwei seitlich gelegene, freie oder feste Federn (3) an zwei aufeinander folgenden Kanten haben.

9. BAUTEILSATZ FÜR DIDAKTISCH-ERZIEHERISCHE SPIELE, laut dem 8. Patentanspruch, der **dadurch gekennzeichnet ist, dass** das viereckige Unterteil (1), in zwei sich ergänzende Dreiecke (13, 14) unterteilt ist, die entweder eine axiale Aussparung (4) haben können oder nicht. Beide Teile haben jedoch seitliche Federn (3) zum Einfügen auf gleicher Ebene, wobei jedes der Teile an den der Hypotenuse entsprechenden Kanten, auf jeder Seite der axialen Aussparung (4), ergänzende Vorsprünge (15) und Einbuchtungen (16) aufweist, die ein Zusammenfügen mithilfe einer Verspundung ermöglichen.

10. BAUTEILSATZ FÜR DIDAKTISCH-ERZIEHERISCHE SPIELE, laut dem 9. Patentanspruch, in dem die Vorsprünge (15) sich im gleichen halben Bauteil (13) und im gleichen Abstand befinden, der dem Durchmesser der ringförmigen, konzentrischen Abschrägung (6) des Unterteils (1) entspricht, um eine Verbindung dieses halben Bauteils (13) zu einem Unterteil (1), das diesem im rechten Winkel gegenüberliegt, zu ermöglichen.

11. BAUTEILSATZ FÜR DIDAKTISCH-ERZIEHERISCHE SPIELE, laut dem 8. Patentanspruch, der **dadurch gekennzeichnet ist, dass** er ein bewegliches Teil besitzt (17), das aus zwei viereckigen Unterteilen besteht, von denen eines an der Kante, die keine Federn enthält, zwei parallel angeordnete und zur Verlängerungsebene senkrechte Bügel besitzt. Das andere Unterteil zur Verlängerung hat einen zusätzlichen Stift im ähnlichen quadratischen Möbelstück, wobei gemeinsam ein Bauteil mit Scharnier gebildet wird, das verschiedene stabile Winkelstellungen zulässt, bei denen bis zu 180 Grad erreicht werden können. Die Längsseiten, die den beiden Scharnierflügeln am nächsten liegen, bilden einen 45 Grad Winkel um eine Drehung von 90 Grad in beide Richtungen zu ermöglichen.

12. BAUTEILSATZ FÜR DIDAKTISCH-ERZIEHERISCHE SPIELE, laut jedem der obigen Patentansprüche, in dem Kappen (19) angebracht sind, die an ihrer Unterseite einen Vorsprung haben, der in die axiale Aussparung (4) und in die ringförmige, koaxiale Abschrägung (6) der viereckigen Unterteile (1), in die ergänzenden rechteckigen, verlängerten Dreiecke (13, 14) und die Flügel der Scharnierteile (17) passen.

13. BAUTEILSATZ FÜR DIDAKTISCH-ERZIEHERISCHE SPIELE, laut dem 12. Patentanspruch, in dem die Kappen (19) auf ihrer Unterseite einen ringförmigen Vorsprung und auf ihrer Oberseite eine ringförmige Fuge besitzen, die dem ringförmigen Vorsprung auf der Unterseite entspricht, so dass die Bauteile aufeinander gestapelt werden können. Zusätzlich besitzen die Möbelstücke einen zylindrischen, hohlen, koaxialen Zapfen, welcher umgekehrt in die axiale Aussparung (4) der Unterteile (1) eingefügt werden kann.

14. BAUTEILSATZ FÜR DIDAKTISCH-ERZIEHERISCHE SPIELE, laut dem 13. Patentanspruch, in dem die ringförmigen Vorsprünge auf den Unterseiten der Kappen (19) nicht durchgehend sind und vier Strecken bilden, deren Abstände die rechtwinklige Anordnung, in zwei Stellungen, einer weiteren Kappe (19) oder eines zusammengefalteten Papiers o.ä. ermöglichen.

15. BAUTEILSATZ FÜR DIDAKTISCH-ERZIEHERISCHE SPIELE, laut jedem der obigen Patentansprüche 12 bis 14, in dem die Kappen (19) aus zwei Teilstücken (20), dadurch dass sie diagonal durchtrennt worden sind, bestehen.

16. BAUTEILSATZ FÜR DIDAKTISCH-ERZIEHERISCHE SPIELE, laut dem 1. Patentanspruch, in dem das Möbelstück rechteckige Bügel (22) besitzt, die eine Fuge (2) in ihrem gesamten Umfang aufweisen. Auf der Oberfläche sind parallele Abschrägungen (23) angebracht, in die viereckige Unterteile (1) und weitere längliche Bauteile (bis zu zehn Teile) eingelassen werden können, aus denen die viereckige Hauptoberfläche besteht, wobei die entsprechende Ziffer gekennzeichnet und erstellt ist.

17. BAUTEILSATZ FÜR DIDAKTISCH-ERZIEHERISCHE SPIELE, laut dem 1. Patentanspruch, in dem der Bauteilsatz einige rechteckige Leisten (25) besitzt, die in ihrem Umfang eine Fuge (2) aufweisen, sowie Federn zur Verlängerung auf gleicher Ebene, auf deren Oberfläche eine Längsabschrägung angebracht (23) ist, in die das Unterteil (1) eingelassen werden kann, auf welcher sich wiederum zehn axiale Aussparungen (4) befinden oder auch die Kombination von weiteren, kleineren Unterteilen (1).

18. BAUTEILSATZ FÜR DIDAKTISCH-ERZIEHERISCHE SPIELE, der **dadurch gekennzeichnet ist, dass** er folgende Teile besitzt:
- Ein Unterteil (1), das mindestens eine axiale Aussparung (4) aufweist und ringförmige, konzentrische Abschrägungen (6) mit einer Fuge (2) in ihrem Umfang und Federn (3) zur Verlängerung auf der gleichen Ebene,
- Dreieckige Unterteile (13, 14), die durch einen diagonalen Schnitt der viereckigen Unterteile (1) entstanden sind. Diese Teile besitzen Vorrichtungen zu ihrer gegenseitigen Verlängerung mittels Verspundung (15, 16) u.a.:
- Viereckige Kappen (19), die einen durchgehenden oder einen unterbrochenen ringförmigen Vorsprung auf ihrer Unterseite zum Einschieben in die ringförmige Abschrägung der Unterteile (1) besitzen. Sie haben zudem noch eine ringförmige Fuge auf ihrer Oberseite, durch die ein Stapeln ermöglicht wird und einen zylindrischen koaxialen Zapfen zum umgekehrten Einschieben in die axialen Aussparung (4) der Unterteile (1).
- Dreieckige Kappen (20), die durch einen diagonalen Schnitt der viereckigen Kappen (19) entstehen, so dass ein rechteckiges Brett gebildet wird, das ein Spielbrett darstellt oder das den Rand eines Mosaiks mithilfe der dreieckigen Unterteile (13, 14) darstellt, wobei über diesem Brett die viereckigen (19) oder die dreieckigen Kappen (20) angebracht werden können, die notwendig sind, um weitere Mosaike zu bilden.

19. BAUTEILSATZ FÜR DIDAKTISCH-ERZIEHERISCHE SPIELE, laut dem 18. Patentanspruch, in dem zudem Gelenkteile (17), Scharnieren ähnlich, angebracht werden, die aus zwei viereckigen Hauptteilen bestehen, von denen eines an seinen freien Kanten Federn besitzt. Beide Teile haben parallele, senkrecht zur Verlängerungsebene angebrachte Bügel mit einem Vorsprung auf dem anderen, ähnlichen viereckigen Unterteil, wobei gemeinsam ein Bauteil mit Scharnier gebildet wird, das verschiedene stabile Winkelstellungen zulässt, bei denen bis zu 180 Grad erreicht werden können, so dass dreidimensionale und aufklappbare Konstruktionen gebildet werden können.

## Revendications

1. ENSEMBLE DE PIÈCES DE CONSTRUCTION POUR JEUX DIDACTIQUES ET ÉDUCATIFS, qui comporte une pièce de base, de forme parallélépipédique, dotée de moyens d'accouplement à rainure et languette pour l'assemblage coplanaire d'autres pièces de base, et qui comporte une rainure périphérique sur sa tranche pour y insérer des languettes ou des pièces planes, indépendantes ou fixes, en guise d'extension sur certains des bords; cet ensemble se **caractérises par le fait qu'**il comporte un bouton cylindrique à échelons (5), à connecter sur la pièce de base (1) de forme parallélépipédique, pourvue d'au moins un trou axial (4) récepteur, le bouton (5) pouvant tourner dans son logement grâce à des ailettes axiales (7) périphériques logées dans une feuillure annulaire (6) de la pièce de base (1), coaxiale par rapport au trou (4) de cette pièce; l'extrémité des ailettes est élargi et la feuillure annulaire (6) réceptrice de la pièce de base (1) a une section en "C" pour permettre son emboîtement.

2. ENSEMBLE DE PIÈCES DE CONSTRUCTION POUR JEUX DIDACTIQUES ET ÉDUCATIFS, selon la revendication 1, où tant les feuillures annulaires (6) de la pièce de base (1) que les ailettes axiales (7) du bouton cylindrique (5), existent sur les deux faces afin de permettre l'insertion du bouton cylindrique (5) par le haut ou par le bas de la pièce de base (1).

3. ENSEMBLE DE PIÈCES DE CONSTRUCTION POUR JEUX DIDACTIQUES ET ÉDUCATIFS, selon les revendications 1 ou 2, où la partie supérieure du bouton cylindrique (5) comporte une rainure diamétrale (9) qui s'ouvre à la périphérie.

4. ENSEMBLE DE PIÈCES DE CONSTRUCTION POUR JEUX DIDACTIQUES ET ÉDUCATIFS, selon les revendications 1 à 4, où les ailettes axiales (7) du bouton cylindrique (5), du moins celles du bas, possèdent sur les côtés des petits renflements (10) pour les emboîter dans les fentes respectives (11) qui se trouvent sur les grandes faces des pièces de base (1), celles-ci étant placées verticalement côté et selon le diamètre du bouton cylindrique (5), fixées entre les ailettes (7) selon deux verticales perpendiculaires, et la séparation entre ailettes (7) correspondant à l'épaisseur de la pièce de base (1).

5. ENSEMBLE DE PIÈCES DE CONSTRUCTION POUR JEUX DIDACTIQUES ET ÉDUCATIFS, selon l'une quelconque des revendications antérieures, où les feuillures annulaires (6) dans lesquelles s'insèrent les ailettes (7) du bouton cylindrique (5), sont pourvues de petites dents (12) qui jouent avec les ailettes (7) du bouton (5) pour marquer différentes positions stables pour la rainure diamétrale (9) du bouton cylindrique (5).

6. ENSEMBLE DE PIÈCES DE CONSTRUCTION POUR JEUX DIDACTIQUES ET ÉDUCATIFS, selon l'une quelconque des revendications antérieures, où les ailettes (7) supérieure et inférieure des boutons (5) permettent d'empiler les pièces de base (1), cette empilement entre pièces étant obtenu également au moyen de douilles emboîtables à leurs extrémités dans les feuillures annulaires respectives (6) de ces pièces de base (1).

7. ENSEMBLE DE PIÈCES DE CONSTRUCTION POUR JEUX DIDACTIQUES ET ÉDUCATIFS, selon la revendication 6, où les douilles ont leurs bords crénelés qui forment des ailettes similaires à celles des boutons cylindriques (5), en nombre égal et selon la même géométrie.

8. ENSEMBLE DE PIÈCES DE CONSTRUCTION POUR JEUX DIDACTIQUES ET ÉDUCATIFS, selon l'une quelconque des revendications antérieures, comprenant des pièces de base (1) carrées à un seul trou axial (4), et deux languettes latérales (3), fixes ou indépendantes, sur deux bords consécutifs.

9. ENSEMBLE DE PIÈCES DE CONSTRUCTION POUR JEUX DIDACTIQUES ET ÉDUCATIFS, selon la revendication 8, **caractérisé par le fait que** la pièce de base (1) carrée est divisée en deux parties complémentaires triangulaires (13, 14), comportant ou non un trou axial (4), porteuses de deux languettes latérales (3) d'assemblage coplanaire, chacune d'elles comportant sur son bord correspondant à l'hypoténuse, de chaque côté du trou axial (4), des saillies (15) et des encoches (16) complémentaires qui permettent un assemblage à rainure et languette.

10. ENSEMBLE DE PIÈCES DE CONSTRUCTION POUR JEUX DIDACTIQUES ET ÉDUCATIFS, selon la revendication 9, où les saillies (15) se trouvent sur une même demi-pièce (13) et selon un espacement entre elles qui correspond au diamètre de la feuillure annulaire (6) concentrique de la pièce de base (1), pour permettre l'assemblage de cette demi-pièce (13) avec une pièce de base (1) disposée orthogonalement.

11. ENSEMBLE DE PIÈCES DE CONSTRUCTION POUR JEUX DIDACTIQUES ET ÉDUCATIFS, selon la revendication 8, **caractérisé par le fait qu'**il comporte une pièce articulée (17) définie par deux pièces de base carrées, dont l'une possède sur l'un de ses bords libres de languettes, deux ailettes parallèles entre elles et perpendiculaires à son plan, pour s'accoupler à une saillie complémentaire prévue sur l'autre pièce de base carrée similaire, permettant ainsi de former ensemble un corps articulé prenant différentes positions angulaires stables sur 180°; les bords longitudinaux proches des deux plaques de la charnière sont coupés en biseau pour permettre la rotation à 90° dans l'un ou l'autre sens.

12. ENSEMBLE DE PIÈCES DE CONSTRUCTION POUR JEUX DIDACTIQUES ET ÉDUCATIFS, selon l'une quelconque des revendications antérieures, **caractérisé par le fait qu'**il comporte des couvercles (19) munis sur leur face inférieure d'une saillie emboîtable dans le trou axial (4) ou la feuillure annulaire (6) coaxiale des pièces de base (1) carrées, rectangulaires allongées, triangulaires (13, 14) complémentaires, ou des plaques des corps à charnières (17).

13. ENSEMBLE DE PIÈCES DE CONSTRUCTION POUR JEUX DIDACTIQUES ET ÉDUCATIFS, selon la revendication 12, où les couvercles (19) comportent sur la face inférieure une saillie annulaire et un canal annulaire sur la face supérieure, en correspondance avec la saillie annulaire de la face inférieure, pouvant ainsi s'empiler les uns sur les autres, et qui peuvent aussi être dotés d'un ergot cylindrique coaxial creux destiné venir s'insérer en position inversée dans le trou axial (4) des pièces de base (1).

14. ENSEMBLE DE PIÈCES DE CONSTRUCTION POUR JEUX DIDACTIQUES ET ÉDUCATIFS, selon la revendication 13, où la saillie annulaire inférieure du couvercle (19) est discontinue et présente trois sections dont l'écartement permet la disposition orthogonale, dans deux positions, d'un autre couvercle (19) ou d'un carton plié ou similaire.

15. ENSEMBLE DE PIÈCES DE CONSTRUCTION POUR JEUX DIDACTIQUES ET ÉDUCATIFS, selon l'une quelconque des revendications 12 à 14, où les couvercles (19) sont divisés en deux parties (20) selon leur diagonale.

16. ENSEMBLE DE PIÈCES DE CONSTRUCTION POUR JEUX DIDACTIQUES ET ÉDUCATIFS, selon la revendication 1, **caractérisé par le fait qu'**il possède des plans (22) rectangulaires, dotés de rainures sur leur pourtour (2) et comportant à leur superficie des feuillures parallèles (23) permettant d'emboîter les pièces de base (1) carrées ou allongées en nombre multiple de la superficie élémentaire carrée, jusqu'à un nombre de dix, et sur lesquels est marqué et inscrit le nombre correspondant.

17. ENSEMBLE DE PIÈCES DE CONSTRUCTION POUR JEUX DIDACTIQUES ET ÉDUCATIFS, selon la revendication 1, **caractérisé par le fait qu'**il comporte des réglettes rectangulaires (25) à rainure périphérique (2) et des languettes d'assemblage coplanaire, à la superficie desquelles se trouve une feuillure longitudinale (23) d'insertion de la pièce de base (1) porteuse de 10 trous axiaux (4), ou la combinaison d'autres pièces de base (1) plus petites.

18. **JEU DE CONSTRUCTION DIDACTIQUE ET ÉDUCATIF, caractérisé par le fait qu'**il comporte:
- des pièces de base (1) munies d'au moins un trou axial (4) et de feuillures annulaires concentriques (6), avec une rainure périphérique d'assemblage coplanaire (3).
- des pièces de base triangulaires (13, 14), obtenues par découpe des pièces de base carrées (1), selon un plan diagonal et qui comportent des moyens d'assemblage à rainure et languette (15, 16) entre elles.
- des couvercles carrés (19) pourvus d'une saillie annulaire continue ou discontinue sur leur face inférieure pour les insérer dans la feuillure annulaire des pièces de base (1), et comportant en outre un canal annulaire sur leur face supérieure pour les empiler, et un ergot cylindrique coaxial pour les insérer en position inversée, dans le trou axial (4) des pièces de base (1).
- des couvercles triangulaires (20) obtenus par coupure des couvercles carrés (19) par un plan diagonal; permettant la formation d'un panneau rectangulaire formant une tablette ou constituant le contour d'un dessin en mosaïque avec les pièces de base triangulaires (13, 14), les couvercles carrés (19) ou triangulaires (20) étant placés sur ce panneau en nombre suffisant pour former d'autres dessins en mosaïque.

19. **JEU DE CONSTRUCTION DIDACTIQUE ET ÉDUCATIF,** selon la revendication 18, **caractérisé par le fait qu'**il comporte aussi des pièces articulées (17) formant une charnière définie par deux pièces de base carrées, dont l'une possède sur l'un de ses bords sans languette des ailettes parallèles entre elles et perpendiculaires au plan pour les accoupler à une saillie complémentaire prévue dans l'autre pièce de base carrée similaire, permettant ainsi de former ensemble un corps articulé dans différentes positions angulaires stables, jusqu'à 180°, offrant ainsi la possibilité d'obtenir des constructions tridimensionnelles et abattables.
